# EUROPEAN PATENT SPECIFICATION

(11) **EP 2 512 167 B1**
(45) Date of publication and mention of the grant of the patent: **24.04.2019**
(21) Application number: 12160306.2
(22) Date of filing: 20.03.2012
(51) Int. Cl.: H04W 12/06, H04L 29/06, H04W 8/26, G06Q 20/32

(54) **System and method for authenticating mobile terminal**
System und Verfahren zur Authentifizierung eines mobilen Endgerätes
Système et procédé d'authentification d'un terminal mobile

(30) Priority: 12.04.2011 KR 20110033880
(43) Date of publication of application: 17.10.2012
(73) Proprietor: LSIS Co., Ltd., Dongan-gu, Anyang-si Gyeonggi-do 431-080 (KR)
(72) Inventor: Hwang, Ji Hun, 134-051 Seoul (KR)
(74) Representative: K&L Gates LLP

(56) References cited:
- US-A1- 2006 094 405
- US-A1- 2008 208 753
- US-A1- 2010 011 211
- US-A1- 2010 079 237

## Description

### BACKGROUND OF THE DISCLOSURE

### Field of Endeavor

The present disclosure relates to a system and method for authentication, and more particularly to a system employed for authentication of a mobile terminal and a method using the same.

### Background

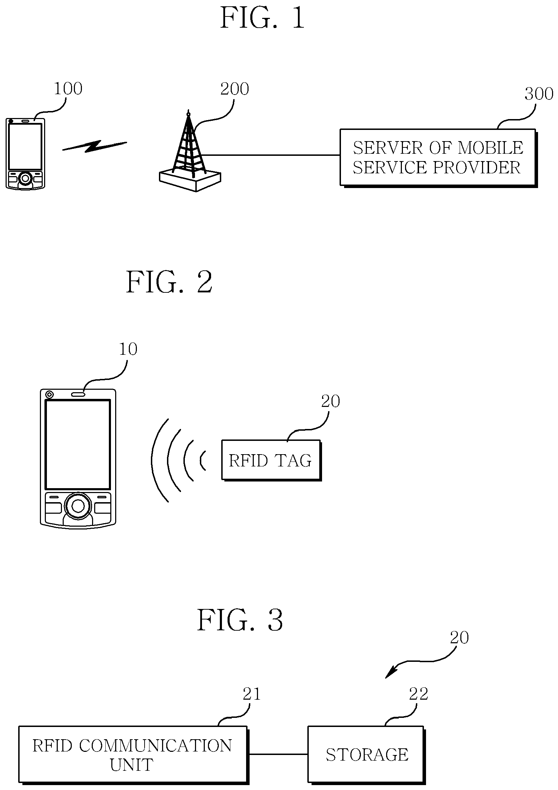

Generally, a user must go through an authentication process to newly activate a mobile terminal. FIG. 1 is an exemplary view illustrating an authentication process of a mobile terminal according to prior art.

In a case a user applies a power to a new mobile terminal (100), a relay (200) receives a signal from the mobile terminal (100) and recognizes that the relevant mobile terminal 100 is a mobile terminal requiring an authentication.

Under this circumstance, when the user (or a seller) inputs a PIN (Personal Identification Number), the relay 200 transmits the occurrence to a server (300) of a mobile service provider, which performs an authentication to the relevant mobile terminal (100). The mobile terminal (100) can now receive a service provided by the server (300) of the mobile service provider following this process.

However, the authentication process is problematic because a user cannot directly get the service without participation by a distributor of the mobile service provider. Thus, another problem is that it takes time to get served, because the user can use the mobile terminal only through the authentication after purchase of the mobile terminal.

Publication US 2008/208753A1 describes a method and a system for providing information on items using a tag connected to the item and a mobile reader to read an item ID from the tag. The item ID is sent from the mobile reader to an object information service server where the item is identified. The service server returns information available on the item to the reader and a user of the reader can in this way receive pre purchase item information through the mobile reader.

### SUMMARY

The present disclosure has been made to solve the foregoing problems of the prior art and therefore an object of certain embodiments of the present invention is to provide a system for authentication of a mobile terminal configured to allow a user to get the authentication immediately after purchase of the mobile terminal, and a method using the same.

The invention is defined by the independent claims.

In one general aspect of the present disclosure, there is provided a system for authentication of a mobile terminal in which the mobile terminal transmits an authentication code to a server of a mobile service provider, the system comprising: a tag for storing the authentication code and transmitting the authentication code to the mobile terminal using a first communication type; and the mobile terminal for receiving the authentication code using a second communication type using a substantially same frequency band as that of the first communication type and transmitting the received authentication code to the server of the mobile service provider using a predetermined third communication type.

Preferably, but not necessarily, the tag comprises a first storage for storing the authentication code, and a first communication unit for transmitting the authentication code to the mobile terminal using the first communication type.

Preferably, but not necessarily, the mobile terminal comprises a second communication unit for receiving the authentication code using the second communication type, and a controller controllably transmitting the authentication code received by the second communication unit to the server of the mobile service provider.

Preferably, but not necessarily, the mobile terminal further comprises a second storage for storing an application for authentication, and the controller drives the application to guide a user to approach the tag to the mobile terminal.

Preferably, but not necessarily, the mobile terminal further comprises a third communication unit transmitting the authentication code to the server of the mobile service provider using the third communication type in response to control of the controller.

In another general aspect of the present disclosure, there is provided a system for authentication of a mobile terminal configured to receive an authentication code from a tag stored with the authentication code and transmitting the authentication code to a server of a mobile service provider, the system comprising: a communication unit receiving the authentication code from the tag; and a controller transmitting the authentication code received by the communication unit to the server of the mobile service provider through a predetermined network.

Preferably, but not necessarily, the system further comprises a storage for storing an application for guiding reception of the authentication code.

Preferably, but not necessarily, the controller drives the application to guide a user to approach the tag.

Preferably, but not necessarily, the communication type of the tag and that of the communication unit are substantially same.

Preferably, but not necessarily, the communication type of the tag and that of the communication unit are different, and use substantially same frequency band.

In another general aspect of the present disclosure, there is provided a method for authentication of a mobile terminal in a system for authentication including the mobile terminal and a server of a mobile service provider, the method comprising: receiving an authentication code from a tag using a first communication type through a second communication type using a substantially same frequency band as that of the first communication type; and performing the authentication by transmitting the authentication code to a server of a mobile service provider.

Preferably, but not necessarily, the first communication type is an RFID, while the second communication type is an NFC.

The present disclosure has an advantageous effect in that an authentication of a mobile terminal can be simply performed by receiving an authentication code stored in an RFID tag by activating an NFC application, whereby a purchaser can individually perform the authentication of the mobile terminal used to be performed by a distributer to thereby promote the user convenience, and one RFID tag is issued to one mobile terminal for one authentication to allow an immediate measure to be taken when there is a theft or a loss of the mobile terminal.

### BRIEF DESCRIPTION OF THE DRAWINGS

The drawing figures depict one or more exemplary embodiments in accord with the present concepts, by way of example only, not by way of limitations. In the figures, like reference numerals refer to the same or similar elements.

Thus, a wide variety of potential practical and useful embodiments will be more readily understood through the following detailed description of certain exemplary embodiments, with reference to the accompanying exemplary drawings in which:
FIG. 1 is an exemplary view illustrating an authentication process of a mobile terminal according to prior art;
FIG.2 is a conceptual view illustrating a system for authentication of a mobile terminal according to the present disclosure;
FIG. 3 is a detailed conceptual block diagram illustrating an RFID tag of FIG. 2 according to an exemplary embodiment of the present disclosure;
FIG.4 is a structural block diagram of a system for authentication of a mobile terminal of FIG.2 according to an exemplary embodiment of the present disclosure;
FIGS. 5a to 5e are schematic views illustrating a method for authentication of a mobile terminal in a system for authentication of the mobile terminal according to an exemplary embodiment of the present disclosure; and
FIG.6 is a flowchart of a method for authentication of a mobile terminal according to the present disclosure.

### DETAILED DESCRIPTION

The disclosed embodiments and advantages thereof are best understood by referring to FIGS. 1-6 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope and novel idea of the present invention.

Meanwhile, the terminology used herein is for the purpose of describing particular implementations only and is not intended to be limiting of the present disclosure. The terms "first," "second," and the like, herein do not denote any order, quantity, or importance, but rather are used to distinguish one element from another. For example, a second constituent element may be denoted as a first constituent element without departing from the scope and spirit of the present disclosure, and similarly, a first constituent element may be denoted as a second constituent element.

As used herein, the terms "a" and "an" herein do not denote a limitation of quantity, but rather denote the presence of at least one of the referenced item. That is, as used herein, the singular forms "a", "an" and "the" are intended to include the plural forms as well, unless the context clearly indicates otherwise.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Also, "exemplary" is merely meant to mean an example, rather than the best. If is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated.

That is, in the drawings, the size and relative sizes of layers, regions and/or other elements may be exaggerated or reduced for clarity. Like numbers refer to like elements throughout and explanations that duplicate one another will be omitted. As may be used herein, the terms "substantially" and "approximately" provide an industry-accepted tolerance for its corresponding term and/or relativity between items.

The present disclosure uses a same frequency band of RFID (Radio Frequency Identification) in HF (High Frequency) band as that of NFC (Near Field Communication). Although the present disclosure has explained the RFID and NFC, it should be apparent to the skilled in the art that other communication methods using a frequency of same frequency band are not ruled out. Furthermore, it should be also apparent to the skilled in the art that the authentication of the present disclosure can be performed by a same communication type, in addition to the other communication type.

Hereinafter, the present disclosure will be described in detail with reference to the accompanying drawings.

FIG.2 is a conceptual view illustrating a system for authentication of a mobile terminal according to the present disclosure.

Referring to FIG.2, a system for authentication of a mobile terminal includes a mobile terminal (10) and an RFID tag (20). Generally, in a case a user purchases the mobile terminal (10), the RFID tag (20) according to the present disclosure is also provided to the user along with the mobile terminal (10).

The mobile terminal (10) according to the present disclosure includes a portable terminal, a smart phone, a tablet computer, a digital broadcasting terminal, a PDA (Personal Digital Computer), and a PMP (Portable Multimedia Player), and is generally referred to a portable terminal that needs an authentication for communication with a server. The mobile terminal (10) according to the present disclosure comprises an NFC communication unit for enabling an NFC communication, a detailed description of which will be provided later with reference to accompanying drawings.

FIG. 3 is a detailed conceptual block diagram illustrating an RFID tag of FIG. 2 according to an exemplary embodiment of the present disclosure.

Referring to FIG. 2, the RFID tag (20) according to the present disclosure includes an RFID communication unit (21) and storage (22). It should be noted that only the constituent parts related to operation of the present disclosure will be described, and other constituent parts generally used for an RFID tag is obvious to the skilled in the art, such that a detailed description thereto will be omitted herefrom.
The RFID communication unit (21) performs an RFID communication at an HF band. The RFID communication unit (21) of HF band generally performs a communication using a frequency in 13.56MHz band. The RFID communication unit (21) according to the present disclosure transmits data to the mobile terminal (10) according to an RFID, in a case a data for authentication is requested from the mobile terminal (10).

The storage (22) stores authentication code for authentication of the mobile terminal (10). A manufacturer of the mobile terminal (10) may store a relevant authentication code in the storage (22) of the RFID tag (20) during manufacturing of the mobile terminal (10).

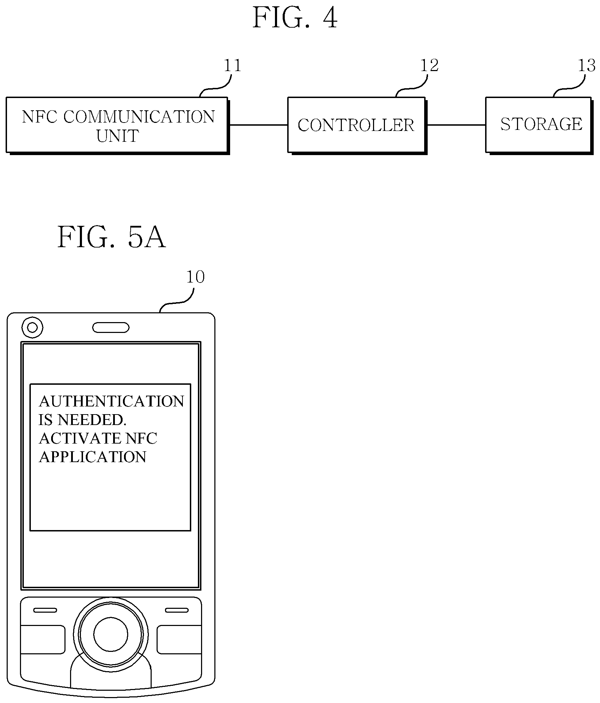

FIG.4 is a structural block diagram of a system for authentication of a mobile terminal of FIG.2 according to an exemplary embodiment of the present disclosure, where the system is embedded in the mobile terminal (10).

Referring to FIG.4, the system for authentication of a mobile terminal includes an NFC communication unit (11), a controller (12) and storage (13). The system is embedded in the mobile terminal (10), and particularly refers to a system for authentication of a mobile terminal relative to the constituent parts in FIG.4 and obvious to the skilled in art such that further description thereto will be omitted.

In general, NFC is a non-contact near field wireless communication type using 13.56MHz frequency band, and refers to a technology capable of bi-directionally transmitting data at a short distance of 10cm with low power consumption. Thus, the NFC communication unit (11) can receive and transmit a signal of NFC frequency band. To be more specific, the NFC communication unit (11) receives from the RFID tag (20) an authentication code stored in the storage (22) using the NFC communication type in response to the control of the controller (12).

The controller (12) controls an overall authentication process of the present disclosure. The controller (12) may control the storage (13) to store an NFC application for authentication in order to operate the present disclosure.

In a case a user wants an authentication of the mobile terminal (10), the controller (12) activates the NFC application stored in the storage (13). The controller (12) controls the NFC communication unit (11) in accordance with the activation of the NFC application, communicates with the RFID communication unit (21) and receives the authentication code stored in the storage (22) of the RFID tag (20).

Successively, the controller (12) transmits the received authentication code to a server (300) of a mobile service provider illustrated in FIG.1, for example, where the server (300) of the mobile service provider performs the authentication of a relevant mobile terminal (10), and where the mobile terminal (10) can use the mobile communication service provided by the server (300) of the mobile service provider.

At this time, the mobile terminal (10) may use a predetermined network (e.g., CDMA, Code Division Multiple Access) in order to transmit the received authentication to the server (300) of the mobile service provider, and to this end, the system may further include a communication unit (not shown) for communicating with the predetermined network.

FIGS. 5a to 5e are schematic views illustrating a method for authentication of a mobile terminal in a system for authentication of the mobile terminal according to an exemplary embodiment of the present disclosure.

Referring to FIG.5a, in a case a user purchases a mobile terminal (10) and applies a power source to the mobile terminal (10), the controller (12) notifies to the user that a relevant mobile terminal (10) needs an authentication through a display unit of the mobile terminal (10), and notifies to the user to activate the NFC application for authentication.

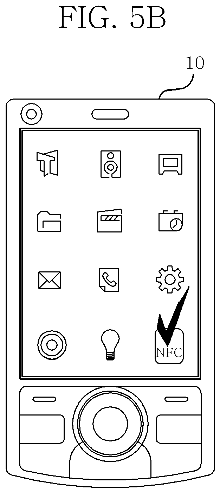

Thereafter, as shown in FIG.5b, the user activates the NFC application on a menu. A check mark (√) in FIG. 5b indicates that the user has selected a relevant NFC application using a pointing device (e.g., finger of the user). It should be apparent to the skilled in the art that the activation of the NFC application means that a relevant communication unit has been activated to receive data through NFC.

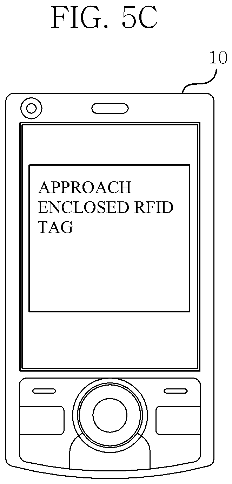

Then, as shown in FIG.5c, the NFC application may request the user to approach the enclosed RFID tag (20) for authentication. However, this is an example for authentication, and it should be also apparent that the NFC application is not used solely for the authentication.

That is, a UI (User Interface) as illustrated in FIG.5c may be realized only in a case authentication of a relevant mobile terminal (10) has not been completed, or an NFC application may be separately mounted only for the authentication to provide the UI as shown in FIG.5c.

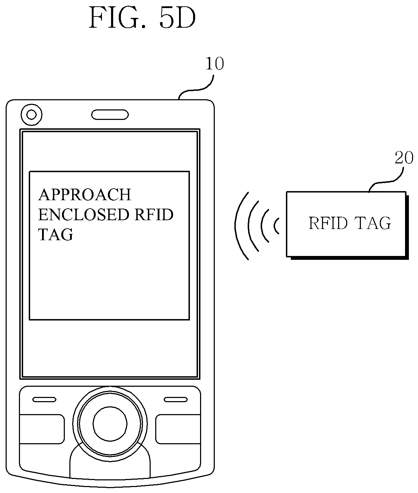

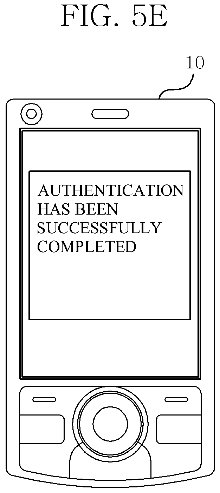

Thereafter, in a case the user approaches the RFID tag (20) to the mobile terminal (10) as depicted in FIG.5d, the controller (12) of the mobile terminal (10) receives the authentication code stored in the storage (22) of the RFID tag (20) through the NFC communication unit (11) of the mobile terminal (10) and the RFID communication unit (21), and transmits to the server (300) of the mobile service provider through a communication unit (not shown) to complete the authentication of the relevant mobile terminal (10). In a case the authentication thus described is finished, a UI as illustrated in FIG.5e is provided to notify the user that the authentication has been completed. Thereafter, the user can use the service of the mobile terminal.

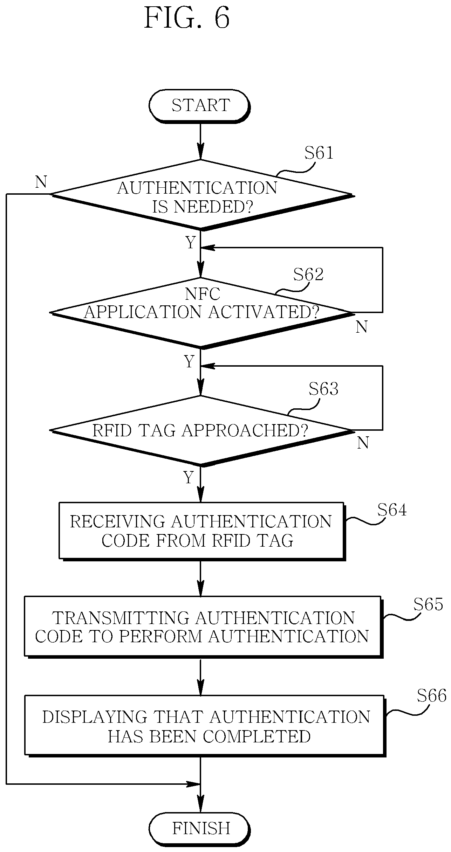

FIG.6 is a flowchart of a method for authentication of a mobile terminal according to the present disclosure.

Referring to FIG.6, the method for authentication of a mobile terminal includes activating, by a user, an NFC application (S62), in case there is a request (S61) for authentication after purchase of a mobile terminal (10), to guide an approach of the enclosed RFID tag (20) as shown in FIG.5c. In a case the user approaches the RFID tag (20) to the mobile terminal (10) (S63), the controller (12) receives the authentication code stored in the storage (22) of the RFID tag (20) through the RFID communication unit (21) and the NFC communication unit (11).

Successively, the relevant authentication code is transmitted to the server (300) of the mobile service provider through a communication unit (not shown) to allow the authentication of the relevant mobile terminal (S65), and in a case the authentication is completed, the completion of the authentication may be displayed on a display unit of the mobile terminal (10) (S66).

The present disclosure has described that the frequency band of the RFID at HF band and the NFC frequency band are same. Although the present disclosure has exemplified the RFID and NFC cases, it should be apparent that other communication types using the same frequency band cannot be ruled out, as explained above.

Although the present disclosure has been described with reference to a number of illustrative embodiments thereof, it should be understood that numerous other modifications and embodiments can be devised by those skilled in the art that will fall within the spirit and scope of the principles of this disclosure.

More particularly, various variations and modifications are possible in the component parts and/or arrangements of subject combination arrangement within the scope of the disclosure, the drawings and the appended claims. In addition to variations and modifications in the component parts and/or arrangements, alternative uses will also be apparent to those skilled in the art.

## Claims

1. A system for authentication of a mobile terminal (10) in which the mobile terminal (10) transmits an authentication code to a server (300) of a mobile service provider such that the mobile terminal (10) can use a mobile communication service provided by the server (300), the system comprising:
a tag (20) for storing the authentication code and transmitting the authentication code to the mobile terminal (10) using a first communication type; and
the mobile terminal (10) for receiving the authentication code using a second communication type using a substantially same frequency band as that of the first communication type and transmitting the received authentication code to the server (300) of the mobile service provider using a predetermined third communication type,
wherein the tag (20) comprises a first storage (22) for storing the authentication code, and
a first communication unit (21) for transmitting the authentication code to the mobile terminal (10) using the first communication type,
wherein the mobile terminal (10) comprises a second communication unit (11) for receiving the authentication code using the second communication type, a controller (12) controllably transmitting the authentication code received by the second communication unit to the server of the mobile service provider, and a second storage (13) for storing an application for authentication, and
wherein the controller (12) is adapted to drive the application to display a message requesting a user to approach the tag (20) to the mobile terminal (10) for authentication in a case the user purchases the mobile terminal (10) and applies a power source to the mobile terminal (10), and is adapted to receive the authentication code stored in the first storage (22) of the tag (20) through the first communication unit (21) and the second communication unit (11) in a case the user approaches the tag (20) to the mobile terminal (10), and
wherein the mobile terminal (10) is adapted to use the mobile communication service in a case the authentication has been completed.

2. The system of claim 1, wherein the mobile terminal (10) further comprises a third communication unit transmitting the authentication code to the server (300) of the mobile service provider using the third communication type in response to control of the controller (12).

3. A mobile terminal for use in a system for authentication of a mobile terminal (10), the mobile terminal being configured to receive an authentication code from a tag (20) storing the authentication code and transmitting the authentication code to a server (300) of a mobile service provider such that the mobile terminal (10) can use a mobile communication service provided by the server (300), the mobile terminal comprising:
a communication unit (11) receiving the authentication code from the tag (20); and
a controller (12) transmitting the authentication code received by the communication unit (11) to the server (300) of the mobile service provider through a predetermined network, and a storage (13) for storing an application for guiding reception of the authentication code,
wherein the controller (12) drives the application to display a message requesting a user to approach the tag (20) for authentication in a case the user purchases the mobile terminal (10) and applies a power source to the mobile terminal (10), and receives the authentication code stored in the tag (20) in a case the user approaches the tag (20) to the mobile terminal (10), and
wherein the mobile terminal (10) can use the mobile communication service in a case the authentication has been completed.

4. The mobile terminal of claim 3, wherein the communication type of the tag (20) and that of the communication unit (11) are substantially same.

5. The mobile terminal of claim 3, wherein the communication type of the tag (20) and that of the communication unit (11) are different, and use substantially same frequency band.

6. A method for authentication of a mobile terminal (10) in a system for authentication including the mobile terminal (10) and a server (300) of a mobile service provider such that the mobile terminal (10) can use a mobile communication service provided by the server (300), the method comprising:
driving an application for authentication of the mobile terminal (10);
displaying a message requesting a user to approach the tag (20) for authentication in a case the user purchases the mobile terminal (10) and applies a power source to the mobile terminal (10);
receiving an authentication code from a tag (20) using a first communication type through a second communication type using a substantially same frequency band as that of the first communication type in a case the user approaches the tag (20) to the mobile terminal (10); and
performing the authentication by transmitting the authentication code to a server (300) of a mobile service provider,
wherein the mobile terminal (10) can use the mobile communication service in a case the authentication has been completed.

7. The method of claim 6, wherein the first communication type is an RFID, while the second communication type is an NFC.

## Patentansprüche

1. System zur Authentifizierung eines mobilen Endgeräts (10), bei dem das mobile Endgerät (10) einen Authentifizierungscode an einen Server (300) eines Mobilfunkanbieters übermittelt, sodass das mobile Endgerät (10) einen von dem Server (300) bereitgestellten Mobilkommunikationsdienst nutzen kann, das System umfassend:
ein Tag (20) zum Speichern des Authentifizierungscodes und zum Übertragen des Authentifizierungscodes an das mobile Endgerät (10) unter Nutzung einer ersten Kommunikationsart; und
das mobile Endgerät (10) zum Empfangen des Authentifizierungscodes unter Nutzung einer zweiten Kommunikationsart unter Nutzung eines im Wesentlichen gleichen Frequenzbandes wie das der ersten Kommunikationsart und zum Übertragen des empfangenen Authentifizierungscodes an den Server (300) des Mobilfunkanbieters unter Nutzung einer vorbestimmten dritten Kommunikationsart,
wobei das Tag (20) einen ersten Speicher (22) zum Speichern des Authentifizierungscodes umfasst, und
eine erste Kommunikationseinheit (21) zum Übertragen des Authentifizierungscodes an das mobile Endgerät (10) unter Nutzung der ersten Kommunikationsart,
wobei das mobile Endgerät (10) eine zweite Kommunikationseinheit (11) umfasst, zum Empfangen des Authentifizierungscodes unter Nutzung der zweiten Kommunikationsart, einen Controller (12), der den von der zweiten Kommunikationseinheit empfangenen Authentifizierungscode steuerbar an den Server des Mobilfunkanbieters überträgt, und einen zweiten Speicher (13) zum Speichern einer Anwendung zur Authentifizierung, und
wobei der Controller (12) dafür ausgelegt ist, die Anwendung anzusteuern,
um eine Nachricht anzuzeigen, die einen Benutzer auffordert,
sich dem Tag (20) zu dem mobilen Endgerät (10) zur Authentifizierung zu nähern, wenn der Benutzer das mobile Endgerät (10) erwirbt und das mobile Endgerät (10) mit einer Energiequelle verbindet, und ist dafür ausgelegt,
den in dem ersten Speicher (22) des Tags (20) gespeicherten Authentifizierungscode durch die erste Kommunikationseinheit (21) und die zweite Kommunikationseinheit (11) zu empfangen, für einen Fall, dass sich der Benutzer dem Tag (20) zu dem mobilen Endgerät (10) nähert, und
wobei das mobile Endgerät (10) dafür ausgelegt ist,
den mobilen Kommunikationsdienst in einem Fall zu verwenden, in dem die Authentifizierung abgeschlossen wurde.

2. System nach Anspruch 1, wobei das mobile Endgerät (10) ferner eine dritte Kommunikationseinheit umfasst, die den Authentifizierungscode an den Server (300) des Mobilfunkanbieters unter Nutzung der dritten Kommunikationsart in Reaktion auf die Steuerung des Controllers (12) überträgt.

3. Mobiles Endgerät zur Verwendung in einem
System zur Authentifizierung eines mobilen Endgeräts (10), wobei das mobile Endgerät konfiguriert ist, einen
Authentifizierungscode von einem Tag (20) zu empfangen, das den Authentifizierungscode speichert und den Authentifizierungscode an einen Server (300) eines Mobilfunkanbieters überträgt, sodass das mobile Endgerät (10) einen von dem Server (300) bereitgestellten Mobilkommunikationsdienst nutzen kann, das mobile Endgerät umfassend:
Eine Kommunikationseinheit (11), die den Authentifizierungscode von dem Tag (20) empfängt; und
einen Controller (12), die den von der Kommunikationseinheit (11) empfangenen Authentifizierungscode über ein vorbestimmtes Netzwerk an den Server (300) des Mobilfunkanbieters überträgt, und einen Speicher (13) zum Speichern einer Anwendung zur Leitung des Empfangs des Authentifizierungscodes,
wobei der Controller (12) die Anwendung ansteuert, um eine Nachricht anzuzeigen, die einen Benutzer auffordert, sich dem Tag (20) zur Authentifizierung zu nähern, wenn der Benutzer das mobile Endgerät (10) erwirbt und das mobile Endgerät (10) mit einer Energiequelle verbindet und den Authentifizierungscode empfängt, der in dem Tag (20) gespeichert ist, wenn sich der Benutzer dem Tag (20) zum mobilen Endgerät (10) nähert, und
wobei das mobile Endgerät (10) den mobilen Kommunikationsdienst in einem Fall verwenden kann, in dem die Authentifizierung abgeschlossen wurde.

4. Mobiles Endgerät
nach Anspruch 3, wobei die Kommunikationsart des Tags (20) und die der Kommunikationseinheit (11) im Wesentlichen gleich sind.

5. Mobiles Endgerät
nach Anspruch 3, wobei die Kommunikationsart des Tags (20) und die der Kommunikationseinheit (11) unterschiedlich sind und im Wesentlichen das gleiche Frequenzband verwenden.

6. Verfahren zur Authentifizierung eines mobilen Endgeräts (10) in einem System zur Authentifizierung, das das mobile Endgerät (10) und einen Server (300) eines Mobilfunkanbieters umfasst, sodass das mobile Endgerät (10) einen von dem Server (300) bereitgestellten Mobilkommunikationsdienst nutzen kann, das Verfahren umfassend:
Ansteuern einer Anwendung zur Authentifizierung des mobilen Endgeräts (10);
Anzeigen einer Nachricht, die einen Benutzer auffordert, sich dem Tag (20) zur Authentifizierung zu nähern, wenn der Benutzer das mobile Endgerät (10) erwirbt und das mobile Endgerät (10) mit einer Energiequelle verbindet;
Empfangen eines Authentifizierungscodes von einem Tag (20) unter Nutzung einer ersten Kommunikationsart durch eine zweite Kommunikationsart unter Nutzung eines im Wesentlichen gleichen Frequenzbandes wie das der ersten Kommunikationsart, wenn sich der Benutzer dem Tag (20) zu dem mobilen Endgerät (10) nähert; und
Durchführen der Authentifizierung durch Übertragen des Authentifizierungscodes an einen Server (300) eines Mobilfunkanbieters,
wobei das mobile Endgerät (10) den Mobilkommunikationsdienst in einem Fall verwenden kann, in dem die Authentifizierung abgeschlossen wurde.

7. Verfahren nach Anspruch 6, wobei die erste Kommunikationsart ein RFID ist, während die zweite Kommunikationsart ein NFC ist.

## Revendications

1. Système d'authentification d'un terminal mobile (10) dans lequel le terminal mobile (10) transmet un code d'authentification à un serveur (300) d'un fournisseur de service mobile de sorte que le terminal mobile (10) puisse utiliser un service de communication mobile fourni par le serveur (300), le système comprenant :
une étiquette (20) destinée à stocker le code d'authentification et à transmettre le code d'authentification au terminal mobile (10) à l'aide d'un premier type de communication ; et
le terminal mobile (10) destiné à recevoir le code d'authentification à l'aide d'un deuxième type de communication utilisant une bande de fréquence sensiblement identique à celle du premier type de communication et à transmettre le code d'authentification reçu au server (300) du fournisseur de service mobile à l'aide d'un troisième type de communication,
dans lequel l'étiquette (20) comprend un premier élément de stockage (22) destiné à stocker le code d'authentification, et
une première unité de communication (21) destinée à transmettre le code d'authentification au terminal mobile (10) à l'aide du premier type de communication,
dans lequel le terminal mobile (10) comprend une deuxième unité de communication (11) destinée à recevoir le code d'authentification à l'aide du deuxième type de communication, une unité de commande (12) transmettant de manière contrôlée le code d'authentification reçu par la deuxième unité de communication au serveur du fournisseur de service mobile, et un deuxième élément de stockage (13) destiné à stocker une application pour une authentification, et
dans lequel l'unité de commande (12) est adaptée pour commander l'application pour afficher un message demandant à un utilisateur d'approcher l'étiquette (20) du terminal mobile (10) pour une authentification dans un cas où l'utilisateur achète le terminal mobile (10) et applique une source d'énergie au terminal mobile (10), et est adaptée pour recevoir le code d'authentification stocké dans le premier élément de stockage (22) de l'étiquette (20) par le biais de la première unité de communication (21) et de la deuxième unité de communication (11) dans le cas où l'utilisateur approche l'étiquette (20) du terminal mobile (10), et
dans lequel le terminal mobile (10) est adapté pour utiliser le service de communication mobile dans un cas où l'authentification est terminée.

2. Système selon la revendication 1, dans lequel le terminal mobile (10) comprend en outre une troisième unité de communication transmettant le code d'authentification au serveur (300) du fournisseur de service mobile à l'aide du troisième type de communication en réponse à une commande de l'unité de commande (12).

3. Terminal mobile destiné à une utilisation dans un système pour une authentification d'un terminal mobile (10), le terminal mobile étant configuré pour recevoir un code d'authentification depuis une étiquette (20) stockant le code d'authentification et transmettant le code d'authentification à un serveur (300) d'un fournisseur de service mobile de sorte que le terminal mobile (10) puisse utiliser un service de communication mobile fourni par le serveur (300), le terminal mobile comprenant :
une unité de communication (11) recevant le code d'authentification depuis l'étiquette (20) ; et
une unité de commande (12) transmettant le code d'authentification reçu par l'unité de communication (11) au serveur (300) du fournisseur de service mobile par le biais d'un réseau prédéterminé, et un élément de stockage (13) destiné à stocker une application destinée à guider la réception du code d'authentification,
dans lequel l'unité de commande (12) commande l'application pour afficher un message demandant à un utilisateur d'approcher l'étiquette (20) pour une authentification dans un cas où l'utilisateur achète le terminal mobile (10) et applique une source d'énergie au terminal mobile (10), et reçoit le code d'authentification stocké dans l'étiquette (20) dans un cas où l'utilisateur approche l'étiquette (20) du terminal mobile (10), et
dans lequel le terminal mobile (10) peut utiliser le service de communication mobile dans un cas où l'authentification est terminée.

4. Terminal mobile selon la revendication 3, dans lequel le type de communication de l'étiquette (20) et celui de l'unité de communication (11) sont sensiblement identiques.

5. Terminal mobile selon la revendication 3, dans lequel le type de communication de l'étiquette (20) et celui de l'unité de communication (11) sont différents et utilisent une bande de fréquence sensiblement identique.

6. Procédé d'authentification d'un terminal mobile (10) dans un système d'authentification comprenant le terminal mobile (10) et un serveur (300) d'un fournisseur de service mobile de sorte que le terminal mobile (10) puisse utiliser un service de communication mobile fourni par le serveur (300), le procédé comprenant :
la commande d'une application pour une authentification du terminal mobile (10) ;
l'affichage d'un message demandant à un utilisateur d'approcher l'étiquette (20) pour une authentification dans un cas où l'utilisateur achète le terminal mobile (10) et applique une source d'énergie au terminal mobile (10) ;
la réception d'un code d'authentification depuis une étiquette (20) à l'aide d'un premier type de communication par le biais d'un deuxième type de communication utilisant une bande de fréquence sensiblement identique à celle du premier type de communication dans un cas où l'utilisateur approche l'étiquette (20) du terminal mobile (10) ; et
la réalisation de l'authentification par transmission du code d'authentification à un serveur (300) d'un fournisseur de service mobile,
dans lequel le terminal mobile (10) peut utiliser le service de communication mobile dans un cas où l'authentification est terminée.

7. Procédé selon la revendication 6, dans lequel le premier type de communication est une RFID, tandis que le deuxième type de communication est une NFC.
